# EUROPEAN PATENT SPECIFICATION

(11) **EP 0 584 404 B1**
(45) Date of publication and mention of the grant of the patent: **22.10.1997**
(21) Application number: 92202554.9
(22) Date of filing: 21.08.1992
(51) Int. Cl.: G06K 13/08

(54) **Card input device**
Karteneinführungsvorrichtung
Dispositif d'entrée de cartes

(43) Date of publication of application: 02.03.1994
(73) Proprietor: ALCATEL ALSTHOM COMPAGNIE GENERALE D'ELECTRICITE, 75008 Paris (FR)
(72) Inventor: van Dooren, Paul Jozef Elisabeth, B-2310 Rijkevorsel (BE); De Vuyst, Hugo Richard Natalis, B-9230 Wetteren (BE)
(74) Representative: Narmon, Gisèle

(56) References cited:
- EP-A- 0 237 991
- EP-A- 0 274 302
- EP-A- 0 287 417
- EP-A- 0 458 421

## Description

The present invention relates to a card input device including a housing in which a card guiding means is mounted between a card entry slot an a read position of a card reading device.

Such a card input device is known in the art, e.g.from the published European patent application No EP-A-0287 417. This known device provides a card input device which prevents a card or strip having not the required width from reaching the read position of the card reading device.

This known device includes an obstacle member mounted between said card entry slot and said read position in order to prevent a card introduced in said card entry slot from reaching said read position other than via card edge guiding grooves provided in parallel side walls of said housing and forming part of said card guiding means.

In this way any card or strip having too small a width to slide in the grooves with its lateral edges is prevented by the obstacle member from reaching the read position of the card reading device.

The card edge guiding grooves each define a non-rectilinear card edge guide path at least with a first portion to which said card entry slot provides access and with an adjoining second portion giving access to said read position, and that said obstacle member is constituted by a guide plate transversely mounted between said parallel side walls at the location of said first path portion in such a way that it forms an upper wall of a first guide channel in line with said entry slot and whose lateral walls include grooves constituting said first path portion.

As the entry slot is in line with the first guide channel but not with the read position, any card or strip inserted in this entry slot and guided or not by the lateral walls of the first guide channel will be guided at least by the obstacle member in a direction away from the read position.

An object of the present invention is to provide an input device such as the above known one but which is suited to further prevent damage to a card reading device when a card or strip not having the required is inserted. According to the invention, this object is achieved by the card input device as described in claim 1.

Indeed, said card reading device includes a reader device proper and a second guide channel which is delimited by an upper wall forming part of said reader device proper and by a lower wall constituted by an abutment member, both said reader device proper and said abutment member being transversely mounted between said parallel side walls of said housing, that said second guide channel is located in the prolongement of the adjoining second portion of said first guide channel, and that said abutment member is mounted in the prolongement of the part of the first guide channel which includes the grooves constituting said first path portion.

In this way a card or strip not guided by the grooves because it has too small a width abuts against the abutment member which prevents further insertion when the card or strip is sufficiently stiff or deflects this card or strip away from the second guide channel when this card or strip is sufficiently flexible. As a consequence damaging the reader device is avoided.

Another characteristic feature of the present card input device is that said lateral walls of said first guide channel also include the grooves constituting said adjoining second path portion.

As a consequence the first guide channel is also not-rectilinear so that a card or strip to be able to reach the read position has necessarily to be sufficiently flexible to be bent and therefore to be guided by its lateral edges in both the non-rectilinear grooves constituting the lateral walls of the first guide channel. This is described in claim 2.

The above mentioned and other objects and features of the invention will become more apparent and the invention itself will be best understood by referring to the following description of an embodiment taken in conjunction with the accompanying drawing wherein :
Fig. 1 is a front view of a card input device CI according to the invention;
Fig. 2 is a cross-section of the card input device CI of Fig. 1 along line II-II thereof and considered in the direction of the arrows.

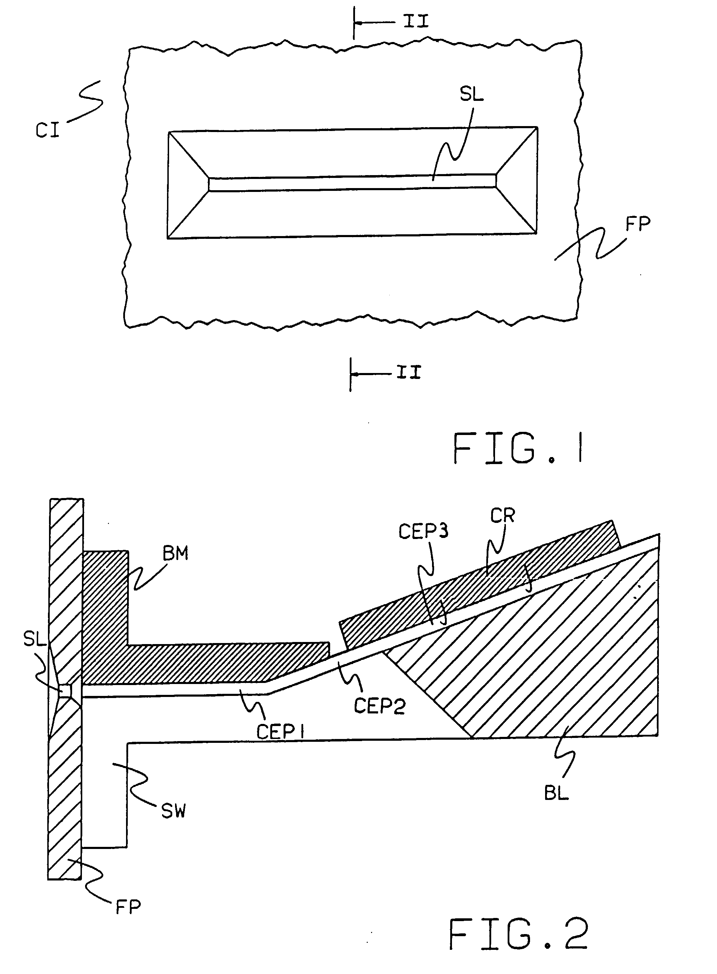

This card input device CI is mounted in a box-shaped housing which is not shown in detail but which has :
- a front wall FP provided with a card entry slot SL for inserting a magnetic card or a chip card;
- two parallel side walls, one of which, SW, is shown in Fig. 2, and in each of which card edge guiding grooves, CEP1 and CEP2, forming a non-rectilinear card edge guide path which is a first part of a card guiding means CEP1/CEP2/CEP3, is provided. The card edge guide path consists of a first portion CEP1 and an adjoining second portion CEP2;
- a card processing or reader device proper CR by which information provided on the chip card may be read and processed, or by which information on a magnetic strip of the magnetic card may be read and processed, processed information being then possibly rewritten on the magnetic card;
- an obstacle member BM which is constituted by a guide plate transversely mounted between the two side walls and forming an upper wall of a first guide channel BM, CEP1/2 whose lateral walls are constituted by the grooves CEP1 and CEP2 in the housing side walls SW. It prevents a card whose edges are not guided by the grooves CEP1 and CEP2 from reaching CR;
- an abutment member BL also transversely mounted between the two side walls SW, and constituting a lower wall of a second guide channel CEP3 of the card guiding means CEP1/2/3. The reader device proper CR and the abutment member BL form an upper and a lower wall, respectively, of a card reading device CR, BL.

The lateral edges of a flexible card introduced in the entry slot SL of the card input device CI and having an overall width comprised between the distance from side wall to side wall and the latter distance augmented by the depths of both grooves, follow the grooves of the first guide channel and are thereby bent in their passage from CEP1 to CEP2 before reaching the second guide channel CEP3 between the abutment member BL and the card processing device propr CR. When the card is in the read position of CR the information on it is processed.

When a card of smaller width is introduced in the card input device CI, it is guided by one of the grooves or not guided at all.

Supposing the card is not guided by the grooves it is clear that it is then not bent by the grooves and that it is then guided by the part of the obstacle member BM in line with and adjacent the entry slot SL in a direction away from the second guide channel CEP3 and towards the abutment member BL. The card abuts against the lower front plane of this abutment member BL which when the card is relatively stiff prevents further insertion thereof or when the card is relatively flexible deflects it downwardly.

It is to be noted that when the lateral edge of a card having too small a width is introduced in the groove of only one of the side walls, it is bent by following the grooves CEP1 and CEP2 in this wall. However, if the card is flexible the other lateral edge thereof is not bent and as a result the abutment member BL again prevents further insertion of the card. If the card is not flexible it is not able to follow the grooves and to be bent.

While the principles of the invention have been described above in connection with specific apparatus, it is to be clearly understood that this description is made only by way of example and not as a limitation on the scope of the invention.

## Claims

1. Card input device (CI) including a housing (FP) in which a card guiding means (CEP1/2/3) is mounted between a card entry slot (SL) and a read position of a card reading device (CR, BL), card edge guiding grooves (CEP1/2) provided in parallel side walls (SW) of said housing (FP) and forming part of said card guiding means (CEP1/2/3) which defines a non-rectilinear card edge guide path at least with a first portion (CEP1) to which said card entry slot (SL) provides access and with an adjoining second portion (CEP2) giving access to said read position whereby said adjoining second portion (CEP2) deflects a guided card away from the direction of said first portion (CEP1) in order to reach said read position and that it further includes an obstacle member (BM) mounted between said card entry slot (SL) and said read position, said obstacle member (BM) is constituted by a guiding means transversely mounted between said parallel side walls at the location of said first path portion (CEP1) in such a way that it forms an upper wall of a first guide channel (BM, CEP1/2) in line with said entry slot and whose lateral walls include the grooves constituting said first path portion (CEP1), said card reading device (CR, BL) including a reader device proper (CR) **characterised** in that a second guide channel (CEP3) which is delimited by an upper wall forming part of said reader device proper (CR) and by a lower wall constituted by an abutment member (BL), both said reader device proper (CR) and said abutment member (BL) being transversely mounted between said parallel side walls (SW) of said housing (FP), and that said second guide channel (CEP3) is located in the prolongement of the adjoining second portion (CEP2) of said first guide channel (BM, CEP1/2) and that said abutment member (BL) is mounted in the prolongement of the part of the first guide channel (BM, CEP1/2) which includes the grooves constituting said first path portion (CEP1) such that said abutment member (BL) guides a card which is not deflected along said adjoining second portion (CEP2) away from said read position.

2. Card input device according to claim 1, characterized in that said lateral walls of said first guide channel (BM, CEP1/2) also include the grooves constituting said adjoining second path portion (CEP2).

## Revendications

1. Dispositif d'entrée de carte (CI) comportant un boîtier (FP) dans lequel un moyen de guidage de carte (CEP1/2/3) est monté entre une fente d'entrée de carte (SL) et une position de lecture d'un dispositif de lecture de carte (CR, BL), des gorges de guidage de bord de carte (CEP1/2) fournies sur des parois latérales parallèles (SW) dudit boîtier (FP) et faisant partie dudit moyen de guidage de carte (CEP1/2/3) qui définit un chemin de guidage de bord de carte non rectiligne, avec au moins une première partie (CEP1) à laquelle ladite fente d'entrée de carte (SL) donne accès, et une deuxième partie (CEP2) contiguë donnant accès à ladite position de lecture, ladite deuxième partie (CEP2) contiguë déviant ainsi une carte de guidage dans le sens contraire à la première partie (CEP1) afin d'atteindre ladite position de lecture et qui comporte en outre un élément d'obstacle (BM) monté entre ladite fente d'entrée de carte (SL) et ladite position de lecture, ledit élément d'obstacle (BM) est composé d'un moyen de guidage monté transversalement entre lesdites parois latérales parallèles au niveau de ladite première partie de chemin (CEP1) de telle sorte qu'il forme une paroi supérieure d'un premier canal de guidage (BM, CEP1/2) aligné avec ladite fente d'entrée et dont les parois latérales comportent les gorges constituant ladite première partie de chemin, ledit dispositif de lecture de carte (CR, BL) comportant un dispositif de lecture approprié (CR) caractérisé en ce qu'un deuxième canal de guidage (CEP3) qui est délimité par une paroi supérieure faisant partie dudit dispositif de lecture approprié (CR) et par une paroi inférieure constituée d'un élément de butée (BL), ledit dispositif de lecture approprié (CR) et ledit élément de butée (BL) étant montés transversalement entre lesdites parois latérales parallèles (SW) dudit boîtier (FP), et en ce que ledit deuxième canal de guidage (CEP3) est situé dans le prolongement de la deuxième partie (CEP2) contiguë dudit premier canal de guidage (BM, CEP1/2) et en ce que ledit élément de butée (BL) est monté dans le prolongement de la partie du premier canal de guidage (BM, CEP1/2) qui comporte les gorges constituant ladite première partie de chemin (CEPI) de sorte que ledit élément de butée (BL) guide une carte qui n'est pas déviée le long de ladite deuxième partie (CEP2) contiguë hors de ladite position de lecture.

2. Dispositif d'entrée de carte selon la revendication 1, caractérisé en ce que lesdites parois latérales dudit premier canal de guidage (BM, CEP1/2) comportent également les gorges qui constituent ladite deuxième partie de chemin (CEP2) contiguë .

## Patentansprüche

1. Karteneingabevorrichtung (CI), die ein Gehäuse (FP) umfaßt, in dem ein Kartenführungsmittel (CEP1/2/3) zwischen einem Karteneingangsschlitz (SL) und einer Leseposition einer Kartenlesevorrichtung (CR, BL) montiert ist, Kartenkantenführungsnuten (CEP1/2) die in parallelen Seitenwänden (SW) des besagten Gehäuses (FP) vorhanden sind und Teil des besagten Kartenführungsmittels (CEP1/2/3) bilden, das einen nicht geradlinigen Kartenkantenführungspfad zumindest mit einem ersten Teil (CEP1) definiert, zu dem der besagte Karteneingangsschlitz (SL) Zugang gibt, und mit einem daran anschließenden zweiten Teil (CEP2), der Zugang zur besagten Leseposition gibt, wobei der anschließende zweite Teil (CEP2) eine geführte Karte aus der Richtung des ersten Teils (CEP1) ableitet, um zu verhindern, daß sie die besagte Leseposition erreicht, und daß sie des weiteren ein Hindernisteil (BM) umfaßt, das zwischen dem besagten Karteneingangsschlitz (SL) und der besagten Leseposition eingebaut ist, wobei das besagte Hindernisteil (BM) aus einem Führungsmittel gebildet wird, das quer zwischen den besagten parallelen Seitenwänden am Ort des besagten ersten Pfadteils (CEP1) so eingebaut ist, daß es eine obere Wand eines ersten Führungskanals (BM, CEP1/2) in Übereinstimmung mit dem besagten Eingangsschlitz bildet, und dessen Seitenwände die Nuten umfassen, die den besagten ersten Pfadteil (CEP1) bilden, wobei die besagte Kartenlesevorrichtung (CR, BL) eine eigene Lesevorrichtung (CR) umfaßt, dadurch gekennzeichnet, daß ein zweiter Führungskanal (CEP3), der von einer oberen Wand begrenzt wird, die Teil der besagten eigenen Lesevorrichtung (CR) isr, und von einer unteren Wand, die von einem Widerlagerteil (BL) gebildet wird, wobei die besagte eigene Lesevorrichtung (CR) und das besagte Widerlagerteil (BL) quer zwischen den besagten Seitenwänden (SW) des besagten Gehäuses (FP) eingebaut sind und daß der zweite Führungskanal (CEP3) sich in der Verlängerung des anschließenden zweiten Teils (CEP2) des besagten ersten Führungskanals (BM, CEP1/2) befindet, und daß das besagte Widerlagerteil (BL) in der Verlängerung des Teils des ersten Führungskanals (BM, CEP1/2) eingebaut ist, der die Nuten umfaßt, die den besagten ersten Pfadteil (CEP1) bilden, sodaß der besagte Widerlagerteil (BL) eine Karte, die nicht abgeleitet wird, entlang dem besagten anschließenden zweiten Teil (CEP2) weg von besagter Leseposition ableitet.

2. Karteneingabevorrichtung gemäß Anspruch 1, dadurch gekennzeichnet, daß die besagten Seitenwände des besagten ersten Führungskanals (BM, CEP1/2) auch die Nuten umfassen, die den besagten zweiten Pfadteil (CEP2) bilden.
